# EUROPEAN PATENT APPLICATION

(11) **EP 4 722 965 A1**
(43) Date of publication of application: **08.04.2026**
(21) Application number: 25201316.4
(22) Date of filing: 10.09.2025
(51) Int. Cl.: G06F 21/62, G06V 40/16, G06V 40/50, G06V 40/10, G06F 21/44, G06F 21/32

(54) **BIOLOGICAL INFORMATION PROCESSING APPARATUS, INFORMATION PROCESSING SYSTEM, BIOLOGICAL INFORMATION PROCESSING METHOD, AND STORAGE MEDIUM**

(30) Priority: 07.10.2024 JP 2024175520
(71) Applicant: Canon Kabushiki Kaisha, Tokyo, 146-8501 (JP)
(72) Inventor: NOMOTO, Atsuo, Ohta-ku, Tokyo, 146-8501 (JP)
(74) Representative: TBK

(57) **Abstract**

A biological processing apparatus (100) includes a biological information acquisition unit (31) that acquires biological information; a biological information use unit (36) that uses the biological information and feature extracted from the biological information; an explicit consent acquisition unit (34) that acquires consent for use of biological information for a person; a biological information use limiting unit (37) that limits the use of the biological information based on a value for the consent; and a consent state presuming unit (32) that presumes a consent state representing consent for use of the biological information for the person based on an acquisition state at the time of acquisition of the biological information. In addition, the biological information limiting unit (37) relaxes the limits on the use of the biological information for the person and the feature that have been extracted from the biological information based on the consent state presumed by the consent state presuming unit (32).

## Description

### TECHNICAL FIELD

The present invention relates to a biological information processing apparatus, in particular, to a biological authentication technology that is optimal for using biological information of a person without causing any ethical problems even if the person's consent has not been obtained.

### BACKGROUND

In recent years, the use of biological information (biometrics) has greatly expanded. As a representative example, in biological authentication technology for security and authentication, an AI technology is known that performs processing such as detection, presumption, and the like using parameters that have been learned from data such as images and the like. Such AI processing is able to perform intelligent processing and determinations in the same manner as a person, and therefore, in recent years, the application thereof to various fields has progressed.

In contrast, the use of personal information (for example, a facial image, fingerprints, an iris, and the like) by a third party without obtaining the person in question's permission can infringe on individual privacy and cause ethical problems, and a certain amount of consideration is required. In particular, according to the purpose thereof, biological authentication of facial images, fingerprints, and the like can infringe on personal privacy, and therefore the possibility that the collection and use of biological information will aid in wrongful monitoring and discrimination has been indicated. Therefore, greater limits are desired in the use of biological information.

For example, Japanese Unexamined Patent Application, First Publication No. 2022-119549 makes disclosures in relation to a technology that uses authentication by facial recognition. Japanese Unexamined Patent Application, First Publication No. 2022-119549 discloses a method in which before registering a target for authentication by facial recognition, the permission of the individual is acquired.

In addition, in relation to this, for example, Non-Patent Publication 1 (Deng, Jiankang, et al. "Retinaface: Single-shot multi-level face localization in the wild." Proceedings of the IEEE/CVF conference on computer vision and pattern recognition. 2020.) contains a disclosure of a technology that specifies a position for when a facial image is acquired.

Although Japanese Unexamined Patent Application, First Publication No. 2022-119549 discloses that consent is acquired before facial image acquisition, there is the possibility that extraction of feature from the biological information represented by the facial image, the use of these feature, and the like will be performed without the person in question having given consent for this.

In addition, even if control is performed so as only to be able to use biological information for people who have given consent therefor, both the user and the operator of the biological authentication acquiring the consent of the people in question is a task that takes time and labor, and the convenience when operating the system decreases.

The goal of the present invention is to provide a biological information processing apparatus that is able to use biological information and feature points from the biological information of a person without causing an ethical problem in a mode that takes into consideration personal privacy even if the consent of the person in question has not been obtained, without increasing the time and labor required from the operator.

### SUMMARY

According to an aspect of the present invention, preferably, an image processing apparatus that obtains a depth from an input image includes: a depth information acquisition unit configured to acquire depth information; a ground region determination unit configured to determine a ground region of a subject of the image; and a reliability calculation unit configured to calculate reliability for the depth acquired by the depth information acquisition unit based on the determination of the ground region determination unit.

Features of the present disclosure will become apparent from the following description of embodiments with reference to the attached drawings. The following description of embodiments is described by way of example.

The present disclosure in its first aspect provides an information processing apparatus as specified in claim 1. Optional features are specified in claims 2 to 11.

The present disclosure in its second aspect provides an information processing system as specified in claim 12.

The present disclosure in its third aspect provides an information processing system as specified in claim 13.

The present disclosure in its fourth aspect provides a recording medium as specified in claim 14.

### BRIEF DESCRIPTION OF THE DRAWINGS

FIG. 1A is a diagram explaining a state of image capturing for when a biological information processing apparatus is used (diagram one of two)
FIG. 1B is a diagram explaining a state of image capturing for when a biological information processing apparatus is used (diagram two of two)
FIG. 2 is a hardware configuration diagram of an image capturing apparatus.
FIG. 3 is a block diagram showing one example of a functional configuration of a biological information processing apparatus according to a First Embodiment.
FIG. 4 is a diagram showing one example of an individual registration table.
FIG. 5 is a diagram showing one example of a presumed consent information table.
FIG. 6 is a flowchart showing processing for registering information relating to individuals for whom biological information will be used.
FIG. 7 is a flowchart showing processing for using biological information for individuals who have been registered.
FIG. 8 is a diagram showing an example of displaying information for AF/AE on a display panel.
FIG. 9 is a diagram showing an example of rules for relationships between the use of biological information and consent information.
FIG. 10 is a configurational diagram of an information processing system that uses biological information.
FIG. 11 is a flowchart showing a series of processing in which in the information processing system according to a Second Embodiment, biological information that has been obtained by an image capturing apparatus 1 is used in external processing.
FIG. 12 is a flowchart showing details of use processing for biological information.

### DESCRIPTION OF THE EMBODIMENTS

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

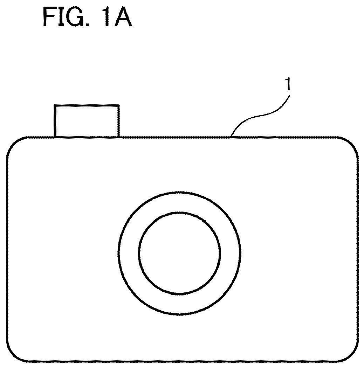

Below, each embodiment of the present disclosure will be explained using FIG. 1A through FIG. 12.

### [First Embodiment]

Below, a First Embodiment according to the present disclosure will be explained using FIG. 1A through FIG. 9.

A biological information processing apparatus according to the present embodiment acquires information that specifies biological information, and acquires explicit consent showing whether a person has consented or has not consented to the use of information specifying this person. In addition, the biological information processing apparatus presumes whether or not there is a state in which consent is presumed based on a state at the time of the acquisition of the information that specifies the person, and limits the use of the information that specifies the person based on the explicit consent that was acquired, and the consent that has been presumed.

Below, an explanation is given of a method in which, in an image that has been captured of a person by an image capturing apparatus (a digital camera), the biological information processing apparatus according to the present embodiment uses the biological information in a case in which biological authentication is performed, and limits the use of the biological information. Note that although an explanation is given in which the biological information processing apparatus in the present embodiment is an apparatus that is built into an image capturing apparatus, this may also be a general information processing apparatus such as a PC (personal computer) that processes images from an image capturing apparatus, or this may also be a server that has been connected via a network.

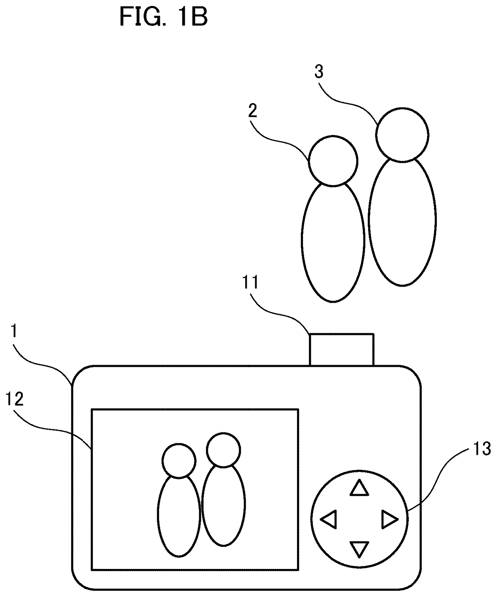

First, the state of image capturing when the biological information processing apparatus according to the First Embodiment is used will be explained using FIG. 1A, and FIG. 1B.

FIG. 1A is a diagram explaining a state of image capturing for when a biological information processing apparatus is used (diagram one of two)

FIG. 1B is a diagram explaining a state of image capturing for when a biological information processing apparatus is used (diagram two of two)

The biological information processing apparatus according to the present embodiment is incorporated into a portion of an image capturing apparatus 1, of which the external view is shown in FIG. 1A, and processes biological information that is included in images. The image capturing apparatus 1 is, for example, a digital camera. FIG. 1 B shows a diagram of the image capturing apparatus 1 as seen from the opposite side of the orientation in FIG. 1A, that is, as seen from the side of the user (photographer).

In this context, a subject 2 that is shown in FIG. 1B is a first subject that is image captured in FIG. 1A, and in this context, is made a person. In addition, a subject 3 is a second subject that is image captured by the image capturing apparatus 1, and is made a person in the same manner. Note that below, there are cases in which a person who is the subject in an image is referred to as an "individual".

Below, the external configuration of the image capturing apparatus 1 according to the user interface will be described using FIG. 1B.

A shutter button 11 is a button for performing opening and closing of a shutter and commanding image capturing in the image capturing apparatus 1 by being pressed down by a user (photographer) who operates the image capturing apparatus 1. A display panel 12 is a panel for displaying results of processing to the user of the image capturing apparatus 1. The display panel 12 displays an image for confirming a configuration, and a state of a subject when performing image capturing. The display panel 12 may be any type of display as long is it is able to display an image, and for example, may also be a liquid crystal panel, an organic EL (electro luminescence) panel, and a projector.

An operating key 13 is an operating key for acquiring an input from the user. The operating key 13 is not limited to a particular type of key as long as it is able to input information from the user. For example, the operating key 13 may be a hardware button that is provided to the image capturing apparatus 1, or it may also be a key that operates a key displayed on the display panel 12 when the display panel 12 is a touch panel format.

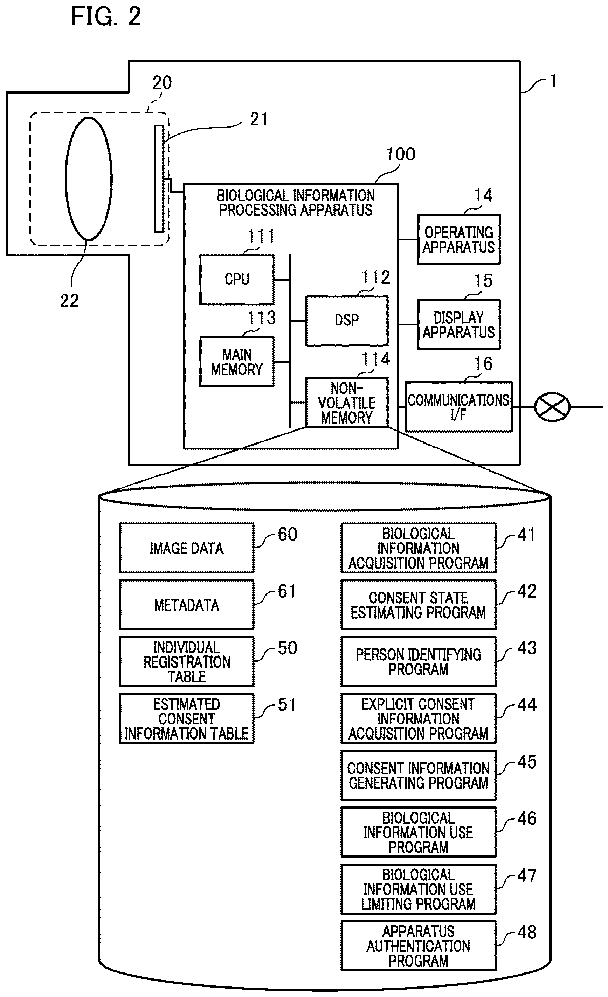

Next, the hardware configuration of the image capturing apparatus will be explained using FIG. 2.

FIG. 2 is a hardware configuration diagram for the image capturing apparatus.

The image capturing apparatus 1 consists of an image capturing unit 20, a biological information processing apparatus 100, an operating apparatus 14, a display apparatus 15, and a communications I/F 16 as is shown in FIG. 2.

The image capturing unit 20 is a configuration that captures external light, and has an image capturing element 21, and an optical system 22. The optical system 22 is a configuration that uses physical phenomena such as the refraction, reflection, diffraction, and the like of light, creates an image of an object, and concentrates light, and has a function that forms an image of a subject on the image capturing element 21. The optical system 22 is configured by a plurality of lens groups (not shown), diaphragms (not shown), and the like.

The operating apparatus 14 includes the shutter button 11 and the operating key 13 that have already been explained, and is an apparatus that is attached to the image capturing apparatus 1 in order for the user to operate the image capturing apparatus 1. The display apparatus 15 is one example of the display panel 12 that has already been explained, and is an apparatus that displays information when the user is performing image capturing using the image capturing apparatus, and when the user is performing necessary settings.

The biological information processing apparatus 100 is an apparatus that performs information processing for processing an image that has been captured that includes biological information. The biological information processing apparatus 100 is, for example, a mode in which, as is shown in FIG. 2, a CPU 111, a DSP 112, a main memory 113, and a nonvolatile memory 114 have been connected via a bus. The CPU (central processing unit) 111 is a processor that references data on the main memory 113 and executes programs. The main memory 113 is a rapid nonvolatile semiconductor storage apparatus that holds data and programs that are accessed by the CPU 111. The DSP 112 is a processor that converts image signals into digital data for images. The nonvolatile memory 114 is a nonvolatile semiconductor storage apparatus such as a flash memory and the like that stores data and programs.

The nonvolatile memory 114 of the present embodiment stores image data 60, image data 61 in which data relating to the image data is written, an individual registration table 50, and a presumed consent information table 51. The details of the image data 61, the individual registration table 50, and the presumed consent information table 51 will be explained below.

In addition, as is shown in FIG. 2, programs that execute each type of function (a biological information acquisition program 41 to an apparatus authentication program 48) are installed on the nonvolatile memory 114. Note that each function will be explained below.

The communications I/F 16 is an interface that performs communications with external devices. The communications 1/F 16 may perform communications by wired communication using a USB or the like, or the communications I/F 16 may also perform communications by a local area network, and wireless communication as defined by IEEE 802.11 standards.

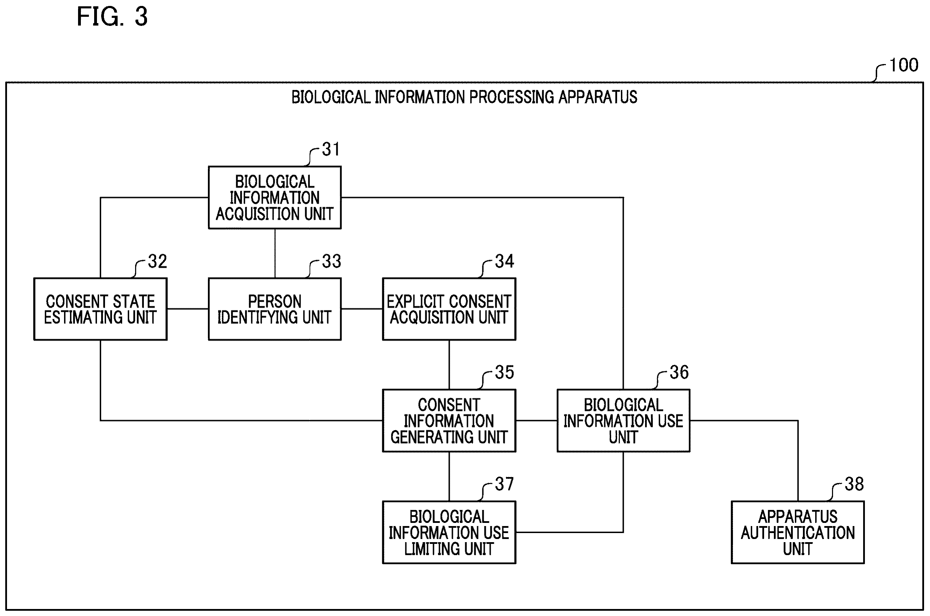

Next, the functional configuration of the biological information processing apparatus according to the First Embodiment will be explained using FIG. 3.

FIG. 3 is a block diagram showing an example of the functional configuration of the biological information processing apparatus according to the First Embodiment.

As is shown in FIG. 3, the biological information processing apparatus consists of each functional unit of a biological information acquisition unit 31, a consent state presuming unit 32, a person specifying unit 33, an explicit consent acquisition unit 34, a consent information generating unit 35, a biological information use unit 36, a biological information use limiting unit 37, and an apparatus authentication unit 38.

The biological information acquisition unit 31 is a functional unit that acquires biological information. In this context, the biological information acquisition unit 31 acquires biological information from captured images in which a subject appears.

The consent state presuming unit 32 presumes a consent state of whether or not consent has been given for the use of biological information from a person who has been specified by the person specifying unit 33 based on the biological information and an acquisition state at the time of the biological information acquisition, and outputs presumed consent information as the presumed results thereof. A specific example of presuming a consent state will be explained below.

The person specifying unit 33 extracts feature from the biological information that has been input, and specifies a person. The feature that have been extracted are associated with the biological information and the consent information and are stored in the nonvolatile memory 114. In addition, the person specifying unit 33 is also able to associate names of people that have been input from the operating apparatus 14 with the feature and consent information and to store these in the nonvolatile memory 114. In addition, the person specifying unit 33 may also have a function that specifies a specific person by referencing feature that have already been registered. In addition, the processing in which feature are extracted from the biological information that is performed by the person specifying unit 33 also has a function to control whether feature are extracted/not extracted, that is, to limit the use of the image capturing apparatus based on consent for the use of the biological information.

The explicit consent acquisition unit 34 acquires explicit consent information showing explicit consent relating to the use of the biological information that has been acquired from the person to which this biological information belongs. In this context, the explicit consent acquisition unit 34 is able to acquire explicit consent information based on inputs via the operating key 13. Note that below, cases in which simply "consent" is written, indicate consent relating to the use of biological information and feature that have been extracted from the biological information, as has been explained above. In addition, although in this context, an explanation is given in which this biological information indicates the entirety of the captured image in which the subject appears, the biological information is not particularly limited as long as it is information within an image that includes information for the subject. For example, an image of a square region (bounding box) in which the subject has been detected, an image of a square region in which the face of the subject has been detected, and the like may also be made the biological information.

The consent information generating unit 35 combines the explicit consent information that was acquired by the explicit consent acquisition unit 34 and the presumed consent information that was output by the consent state presuming unit 32, and generates consent information showing a degree of explicit consent relating to the use of the subject by the image capturing apparatus. The consent information that has been generated is associated with the corresponding biological information and stored on the main memory 113 and the nonvolatile memory 114. In the present embodiment, the biological information is image information for a face in which a person appears in the image, and is stored by associating coordinate information for a square showing the position of the face with the consent information.

The biological information use unit 36 uses the biological information and feature based on the consent information that has been generated by the consent information generating unit 35. The specific method of use will be explained below.

The biological information use limiting unit 37 limits the use of the biological information by the biological information use unit 36 based on the consent information that has been generated by the consent information generating unit 35. The specific limiting method will be explained below.

The apparatus authentication unit 38 performs authentication with an external apparatus that uses the biological information. Thereby, in a case in which this has been authenticated, the biological information processing apparatus 100 is able to perform the transmission and reception of information such as requests for data, and processing with the external apparatus, and the like.

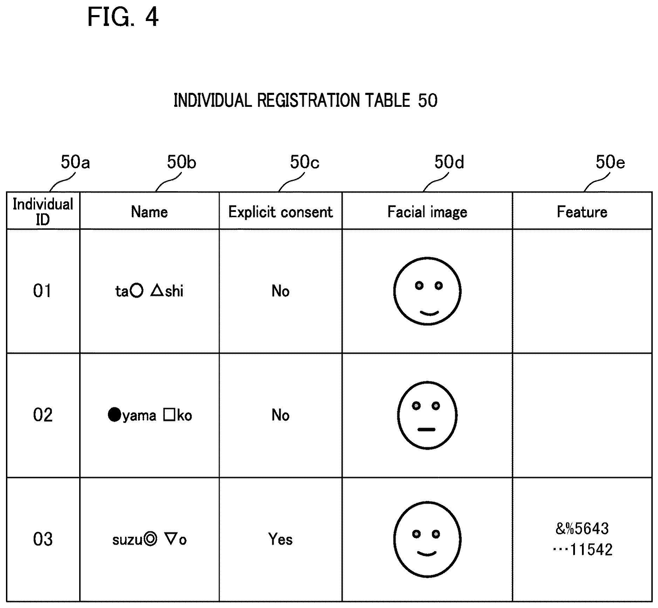

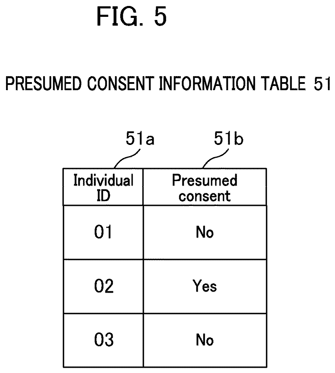

Next, the data structure in which the biological information processing apparatus of the present embodiment is used will be explained using FIG. 4, and FIG. 5.

FIG. 4 is a diagram showing one example of an individual registration table.

FIG. 5 is a diagram showing one example of a presumed consent information table.

As is shown in FIG. 4, the individual registration table 50 consists of each field of an individual ID 50a, a name 50b, an explicit consent 50c, a facial image 50d, and feature 50e.

An ID that uniquely identifies an individual is stored in the individual ID 50a. A character string showing a name of this person is stored in the name 50b in a case in which the name of the individual is clear. A flag showing whether or not there is explicit consent for the use of the biological information from the corresponding individual is stored in the explicit consent 50c. For example, when the value for the explicit consent 50c is "yes", it is made such that there is consent, and when the value for the explicit consent 50c is "no", it is made to show that consent has not been obtained, and the default value is made "no". Data for a facial image for the corresponding individual is stored in the facial image 50d (for example, this may be an image ID and the values for the square coordinates, or this may also be specific image data). Feature for the biological information that has been calculated using a specific algorithm is stored in the feature 50e.

In the example shown in FIG. 4, the three names for the people "Ta○ △shi", "●yama □ko ", and "Suzu⊚ ∇fu" are registered in the name column. In addition, FIG. 4 shows that explicit consent relating to the use of biological information has been obtained for "Suzu⊚ ∇fu", and feature therefor have been extracted and registered. In addition, it is shown that explicit consent in relation to the use of biological information has not been obtained for either of "Ta○ △shi", and "●yama □ko", and feature have not been stored for either of them.

The presumed consent information table 51 is a table in which results of whether or not there is presumed consent for an individual that has been registered in the individual registration table 50 are stored. As is shown in FIG. 5, the presumed consent information table 51 consists of the fields of an individual ID 51a, and a presumed consent 51b.

An ID that uniquely identifies an individual is stored in the individual ID51a in the same manner as for the individual ID 50a of FIG. 2. A flag showing whether or not there is presumed consent for the use of biological information from the corresponding individual is stored in the presumed consent 51b. For example when the value for the presumed consent 51b is "yes", this shows that there is presumed consent, and when the value for the presumed consent 51b is "no", this shows that there is no presumed consent. In this context, presumed consent means that it is presumed that there is consent for the use of the biological data from the corresponding person based on the state of the image capturing and the captured image. Note that the specific processing for determining whether or not there is presumed consent will be described below.

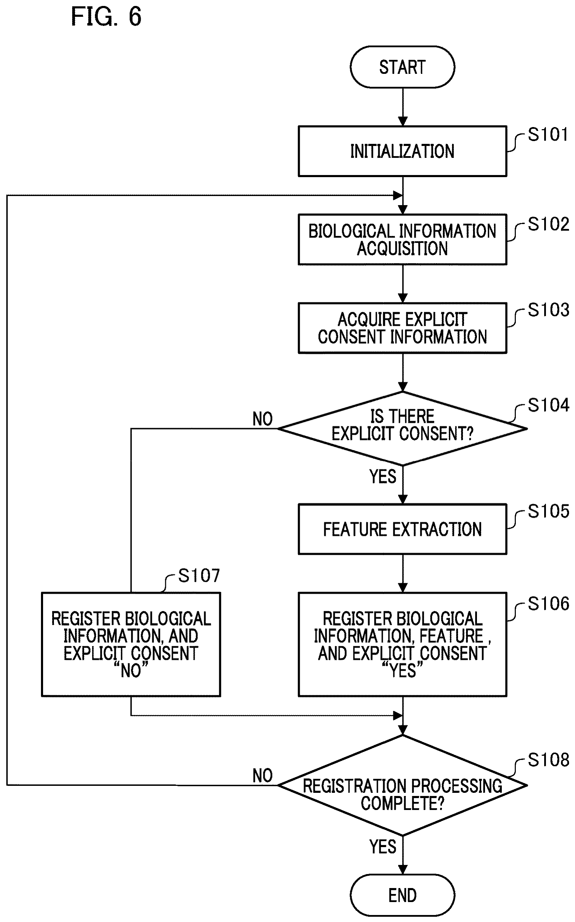

Next, the processing for the use of the biological information by the biological information processing apparatus will be explained using FIG 6 through FIG. 9.

FIG. 6 is a flowchart showing the processing for registering information relating to an individual for whom biological information will be used.

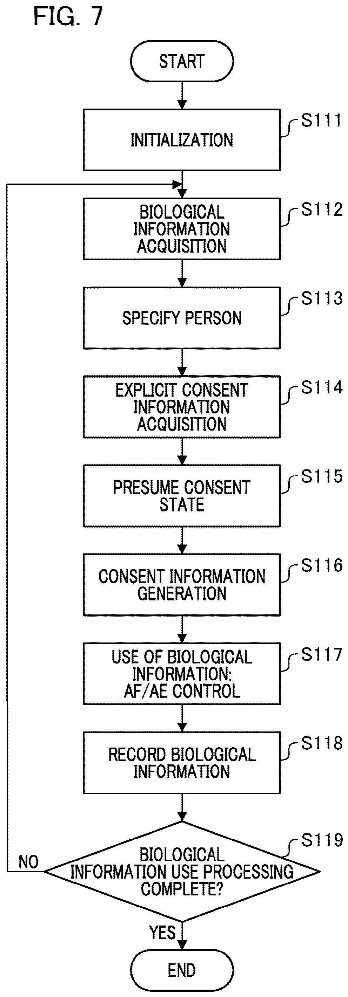

FIG. 7 is a flowchart showing processing for the use of the biological information of an individual who has been registered.

Below, the processing in which the biological information processing apparatus 100 according to the present embodiment uses biological information will be separated into processing in which the information relating to the individual for whom biological information will be used is registered, and processing in which the biological information for the individual who has been registered is used.

In addition, in the processing for registering information relating to an individual, the biological information processing apparatus 100 according to the present embodiment extracts feature relating to the biological information only when there is explicit consent from the individual themselves. In contrast, in the processing in which the biological information for the individual who has been registered is used, it is determined whether nor not there is presumed consent from the induvial themselves based on the situation of the image capturing and the image, and when there is presumed consent, the limits on the usage of biological information are relaxed even if there is no explicit consent from the individual themselves.

First, the processing for registering information relating to the individual for whom biological information will be used will be explained using FIG. 6.

The processing in which the information relating to the individual for whom the biological information will be used is registered, for example, is begun by a command to execute registration processing being made by the user of the image capturing apparatus 1 pressing down the operating key 13, and the like that is shown in FIG. 1B. The user according to the present embodiment is made the user who captures images of the subjects by using the image capturing apparatus 1, such as a digital camera that includes the biological information processing apparatus 100.

First, the biological information processing apparatus 100 performs initialization processing with respect to the registration processing for information relating to the individuals (S101). In this context, the CPU 111 of the biological information processing apparatus 100 reads a program from the nonvolatile memory 114 of FIG 2, and makes the program a state in which it is able to perform the registration processing that is explained below. The processing shown in the following flowcharts is realized by the CPU 111 of the biological information processing apparatus 100 executing the necessary program shown in FIG. 2.

Next, the biological information acquisition unit 31 of the biological information processing apparatus 100 acquires biological information (in this context, the image showing the face of the person from the image capturing apparatus 1 of FIG. 1A, and FIG. 1B) (S102). At this time, the biological information acquisition unit 31 controls the image capturing apparatus 1 so as to adjust the focus and the exposure for the face using a well-known technology, and acquires the captured images. Note that although in this context, the following explanation is given in which there is one person who is the subject in the captured image that will become the biological information, there may also be a plurality of subjects who exist in the captured image, and the processing that is explained below may also be performed individually for each of these plurality of subjects.

Next, the explicit consent acquisition unit 34 of the biological information processing apparatus 100 acquires explicit consent information with respect to the individual (subject) who appears in the captured image that was acquired during S102 (S103). As was previously explained, the explicit consent that is acquired in this context shows the presence or absence of consent relating to the use of the image in which the individual's face appears, that is, use of the biological information.

The "use of biological information" in this context includes performing at least one of registration processing for feature in which a facial image is captured and recorded and feature are extracted from the facial image, authentication processing based on the feature (in this context, processing that specifies a person), and control using the results of the authentication processing. Note that the details of the "use of the biological information" will be explained below. The biological information processing apparatus 100 according to the present embodiment limits the use of this biological information based on explicit consent information and presumed consent information, which will be explained below.

The explicit consent acquisition unit 34 according to the present embodiment is able to acquire explicit consent information based on operations of the user via, for example, the display panel 12 and the operations key 13. Specifically, the explicit consent acquisition unit 34 is able to display, on the display panel 12, a display indicating the use of biological information, and a display that receives a selection of whether or not consent is given for this use of biological information, and acquire the results of this selection to serve as the explicit consent information.

Note that in this context, the name of the user is associated with a unique ID (for example, based on inputs of the user when logging in during operations by the user), and is set in advance. However, settings may also be made by the user based on captured images that are different from the biological information in order to prohibit consent operations being performed by a person who is not the user, that is, so-called "identity fraud". For example, it may be made such that an image capturing apparatus, which is not shown, is further provided that captures images of the operator of the operating key 13, and the user is set based on captured images from such an image capturing apparatus (using well-known person specifying processing). In such a case, it may also be made such that a determination as to whether or not the person for whom the biological information was acquired during S102 is the same person as the user who has been set is additionally performed, and in a case in which these are not the same person, the processing for FIG. 6 is completed at this point in time.

In addition, although in this context, an explanation has been given in which the explicit consent information is acquired based on an input from the user via the operating key 13, there are no particular limitations on this processing as long as it is possible to acquire the presence or absence of consent from the user. For example, it may also be made such that in a case in which it has been detected that the user has performed a specific movement (for example, has made a sound for consent, and a gesture for consent) it is determined that this user consents to the use of biological information, and the image capturing by the image capturing apparatus 1 and the use processing for the biological information (for example, authentication information) are performed. According to such processing, it is possible to show agreement to consent using only the performance of a gesture, and therefore, the convenience is increased. Note that it is possible to use, for example, a movement such as making a peace sign using a hand, raising a hand, lowering a hand, and the like as the gesture, and it is possible to perform the recognition of the gesture using a well-known movement recognition technology.

Next, the explicit consent acquisition unit 34 of the biological information processing apparatus 100 performs a determination as to whether or not the user has consented to the use of their biological information based on the explicit consent information that was acquired during S103 (S104). In a case in which the user consents (S104: yes), the processing proceeds to S105, and in a case in which the user does not consent (S104: No), the processing proceeds to S107.

Next, the person specifying unit 33 of the biological information processing apparatus 100 extracts feature from the biological information for the user who has consented to the use of biological information (S105). As was explained above, the biological information is a captured image in which the face of an individual appears, and the person specifying unit 33 extracts feature from this face after having specified the position of the face in the captured image. It is possible to use an arbitrary well-known image recognition technology during the processing that specifies the position of the face in the captured image and the processing that extracts the feature from the person's face. For example, the technology that is disclosed in Non-Patent Publication 1, and the like may be used in order to specify the position of the face in the captured image. In addition, for example, a method using deep learning may also be used in order to extract the feature from the person's face, and a method such as LBP (Local Binary Pattern), and HiG (Histogram Oriented Gradient), and the like may also be used in order to extract the feature from the person's face.

When there is explicit consent in S104, the person specifying unit 33 of the biological information processing apparatus 100 makes the explicit consent "yes", associates the biological information and the feature that have been extracted with a unique identifier, and registers values in each of the fields in the individual registration table 50 that was shown in FIG. 4 (S106). The person specifying unit 33 is able to acquire the name by receiving input from the user using the operating apparatus 14 of FIG. 2. There are no particular limitations on the format of the name according to the present embodiment, and for example, the name may be the person's real name, the name may also be a nickname, and the name may also be a number, a symbol, and the like. In addition, although an explanation has been given in which the person specifying unit 33 of the present embodiment performs the registration of the explicit consent information, the processing may also be performed by a different functional unit, such as making the explicit consent acquisition unit 34 register the explicit consent information, and the like.

When there is no explicit consent during S104, the person specifying unit 33 of the biological information processing apparatus 100 makes the explicit consent "No", associates the biological information with a unique identifier, and registers values for each of the fields in the individual registration table 50 that was shown in FIG. 4 (S107).

Next, the person specifying unit 33 of the biological information processing apparatus 100 determines whether or not to complete the registration processing (S108). In this context, for example, it may be determined that the registration processing will be completed in a case in which the user has performed an input to complete the registration processing. In a case in which it has been determined that the registration processing will be completed (S108: Yes), the processing is completed, and in a case in which it has been determined that the registration processing will not be completed (S108: No), the processing returns to S102.

Next, the processing for using the biological information of the individual who has been registered will be explained using FIG. 7.

The process that is shown in FIG. 7 shows a process in which an image is captured of the subject using a technology in which the user of the image capturing apparatus 1 such as a digital camera specifies a person. For example, the process shown in FIG. 7 is begun by the user of the image capturing apparatus 1 creating a state in which the shutter button 11 shown in FIG. 1B is pressed half-way down. Note that the image capturing explained below (the recording of captured images) is executed by further pressing down the shutter button after pressing the shutter button down halfway. In addition, it is made such that the processing for using the biological information according to the present embodiment (authentication processing) is performed after the registration processing in which the information relating to the individual is registered, which was shown in FIG. 6, has been completed at least one time.

First, the biological information processing apparatus 100 performs initialization for the processing to use the biological information (S111). In this context, the biological information processing apparatus 100 reads a program from the nonvolatile memory 114 that was shown in FIG. 2, and makes a program that will execute the following process able to be operated. In addition, as the initialization processing, the biological information processing apparatus 100 loads a registration dictionary from the nonvolatile memory 114 and puts it in a usable state.

Next, the biological information acquisition unit 31 of the biological information processing apparatus 100 acquires biological information (in this context, an image in which the face of the individual appears from the image capturing apparatus 1 of FIG. 1B). In this context, the biological information acquisition unit 31 acquires an image of a candidate for registration from the image capturing element 21 to serve as biological information. The captured image that has been acquired in this context is displayed on the display panel 12 as a live view during the processing explained below. It is made possible for the user to determine the configuration of the image to be recorded and the timing at which to press down the shutter button 11 while confirming this live view. Note that the captured image acquired in this context may also include a plurality of faces.

Next, the person specifying unit 33 of the biological information processing apparatus 100 extracts feature from the image (biological information) that has been input, and specifies who the subject of the biological information is by comparing the extracted feature with feature that are stored in the individual registration table 50 (S113). It is necessary to specify the person in order to confirm the presence or absence of explicit consent, and therefore, it is made such that in this context, feature are temporarily extracted from biological information that has been input without explicit consent, and are deleted when the use thereof is completed. In a case in which a plurality of faces are included in the image, feature are extracted from each of this plurality of faces. Specifically, the comparison of feature calculates a degree of similarity between the feature, and in a case in which from among the registered individuals, there is an individual for whom the degree of similarity exceeds a predetermined threshold value, it is possible to determine that the person that has been extracted is that individual, and in a case in which there are no people for whom this threshold value has been exceeded, it is possible to determine that the person who has been extracted is none of these individuals. In this context, it is possible to use an arbitrary well-known technique as the method for calculating the degree of similarity, and for example, a Cosine degree of similarity may be used as the degree of similarity, and an L2 distance and the like may also be used. L2 distance is a criterion in which the closer the distance between the feature is, the smaller the value becomes, and therefore, this may also be used by converting the multiplicative inverse of the L2 distance to the degree of similarity. In this context, as was explained in the explanation of FIG. 4, feature have not been registered for "●yama □ko", and therefore, it is not possible to reference "●yama □ko".

Next, the consent state presuming unit 32 of the biological information processing apparatus 100 acquires the value for the explicit consent 50c in the corresponding record for the person who has been specified among the input biological information, and confirms the presence or absence of consent (S114). As was explained above, the two values that are possible for the explicit consent 50c are yes/no for consent.

Next, the consent state presuming unit 32 of the biological information processing apparatus 100 references the explicit consent information that was acquired during S114, and presumes the consent state for the subject for whom there is no explicit consent (S115). In this manner, it is possible to refine the targets for the presumption of the consent state to the subjects for whom there is no explicit consent, and this is linked to a reduction in the processing burden. In addition, the consent state may also be presumed for all of the people without performing refining. Below, a specific explanation will be given of the presumption method for the consent state.

In order to presume the consent state for the subject, it is made such that after having referenced the acquisition state for the biological information, it is deemed that there is presumed consent in a case in which the acquisition state fulfills predetermined conditions. In this context, the acquisition state is the state of the apparatus, the subject, and the surroundings thereof at the time of the acquisition of the biological information. Specifically, in the present embodiment, for example, in a case in which the two conditions of the position of the image capturing apparatus 1 being close to the subject, and the state of subject being that the subject is front facing and is smiling or making a neutral facial expression are satisfied, it is determined that this is a consent state in which consent is presumed, that is, that there is presumed consent.

Below, the details of the conditions for this presumption of consent will be explained.

With respect to the condition of the position of the image capturing apparatus, if the position of the image capturing apparatus is close to the subject, it can be presumed that this is not a state in which an image has been secretly taken from afar, and that the subject is able to know that they are having their image captured, and therefore, this can become grounds for determining presumed consent. That is, the positional relationship between the image capturing apparatus and the subject are made a condition. As the specific condition, the distance between the subject and the image capturing apparatus is calculated, and it is determined that this condition has been fulfilled if the distance is less than a predetermined value. The distance between the image capturing apparatus and the subject is measured by using a distance sensor that is built into the image capturing apparatus. The distance may also be calculated from the relationship between information from a well-known lens and sensor and the size in the image of the subject that has been image captured.

With respect to the conditions for the state of the subject, in a case in which the subject is facing the direction of the image capturing apparatus, and in which the subject is making a specific expression or gesture, it can be presumed that the subject is able to know that their image is being captured, and therefore, this can be made the grounds for determining presumed consent. As the specific conditions, well-known image recognition technology is used, facial orientation and facial expressions of the subject are detected from the image, and in a case in which the facial orientation is front facing (that is, facing the direction of the image capturing apparatus 1), and the facial expression is a smile or a neutral expression, it is determined that the condition has been satisfied. In this context, although the facial orientation and the expression were combined to make one condition, they may also be used individually, and may also be combined with other conditions such as gestures and the like. In addition, a predetermined gesture (an OK sign, and the like) may also be set in the biological information processing apparatus 100 in advance, and if it is determined that there is presumed consent in a case in which this gesture can be detected, it is possible to reduce the possibility of mistakenly determining presumed consent despite the conditions from which presumed consent can be presumed being limited.

In a case in which both of the above-described two conditions are satisfied, the consent state presuming unit 32 presumes that there is presumed consent, and stores the value "yes" in the presumed consent 51b for the corresponding record in the presumed consent information table 51 that was shown in FIG. 5.

Next, the consent information generating unit 35 of the biological information processing apparatus 100 generates consent information based on the value for the explicit consent that was acquired during S114 and the value for the presumed consent that was presumed during S115 (S116). The consent information is one of three values, "no consent", "presumed consent", and "explicit consent". In a case in which the value for explicit consent is the value "yes" (there is explicit consent from the subject) the value for the consent information is made "explicit consent". In addition, in a case in which the value for the explicit consent is "no" (there is no explicit consent from the subject), and the value for the presumed consent is "yes" (it is presumed that there is consent from the subject), the value for the consent information is made "presumed consent". In addition, in a case in which the value for the explicit consent is "no" (there is no explicit consent from the subject), and the value for the presumed consent is "no" (it is not presumed that there is consent from the subject), the value for the consent information is made is made "no consent". Performing settings in this manner means that the degree of explicit consent for the consent information in relation to the biological information of a subject and the use of this biological information increases in the order of "no consent", "presumed consent", and "explicit consent" (that is "no consent"< "presumed consent"< "explicit consent").

Next, the biological information use unit 36 of the biological information processing apparatus 100 uses the biological information based on the limits from the biological information use limiting unit 37 (S117). The use of biological information in this context is, for example, the use of feature that have been extracted during S113, and use in the control of the image capturing parameters of the image capturing apparatus 1 (in this context autofocus (AF) control, and auto exposure (AE) control). For example, the biological information use limiting unit 37 is able to perform control of the image capturing parameters such that focus and exposure are controlled with respect to the face of a subject for whom the name has been specified. That is, the biological information use limiting unit 37 performs control such that a person for whom a name has not been specified (who has not explicitly consented to the use of their biological information) is not made a target for reference during the control of the image capturing parameters (the focus cannot be adjusted).

However, at this time, the image capturing parameters are controlled such that the focus and exposure are controlled in the same manner as for the case of explicit consent for people for whom "presumed consent" has been determined from among the people whose names have not been specified, (the focus can be adjusted).

The control of the focus and exposure for specific people can be executed using publicly known AF/AE technologies. Note that in this context, in a case in which there are a plurality of people within the captured image whose names have been specified, it is made such that it is possible to indicate in advance for which of these subjects the focus and exposure will be adjusted (for example, it is possible to set a degree of priority for each person).

Next, the biological information use unit 36 of the biological information processing apparatus displays the information for the AF/AE on the display panel 12 to serve as the results of the use of the biological information (S117).

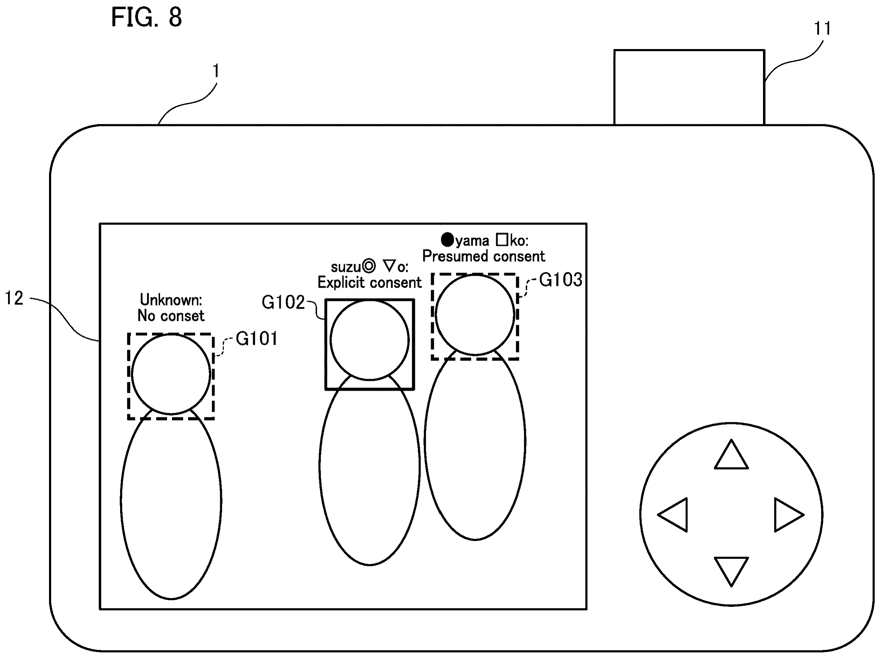

Below, examples in which the AF/AE information is displayed on the display panel will be explained using FIG. 8.

FIG. 8 is a diagram showing an example of displaying the AF/AE information on the display panel.

In FIG. 8, a face frame G101 for a person who has been displayed as "Unknown", a face frame G102 for the person who has been displayed as "Suzu⊚ ∇fu", and a face frame G103 that has been displayed as "●yama oko" are disposed. In addition, "explicit consent" is combined and displayed as the value for the consent information for G102, and "presumed consent" is combined and displayed as the value for the consent information for G103.

Although the face frame G101 is related to "Ta○ △shi", explicit consent has not been given for the use of biological information for this person, and furthermore, it has also been determined that there is no presumed consent, and therefore, this means that this person has not been specified. The face frame G102 is related to "Suzu⊚ ∇fu", and as was explained before, "Suzu⊚ Vfu" has explicitly consented the use of biological information, and therefore, it has been determined that this is "Suzu⊚ Vfu" by referencing the feature for "Suzu⊚ Vfu" from the individual registrational table 50, and "Suzu⊚ Vfu" is displayed. In addition, the face frame G103 is for "●yama oko", and although they have not given explicit consent, it has been determined that there is presumed consent, and this means that therefore, specification of the person using feature has been executed, and the results thereof have been used in the control of the above-described image capturing parameters and the display that is shown in FIG. 8.

In this manner, it is possible to limit the use of biological information by making it such that the specification of a person and the results thereof cannot be performed and used for a person who has not given explicit consent. Furthermore, it is made such that even in a case in which there is no explicit consent, it is possible to use biological information by the determination of presumed consent. That is, the limits on the use of biological information are relaxed in a case in which there is no explicit consent by presumed consent for the subject. By doing so, in a case in which there is no explicit consent, it becomes possible to use the biological information without needing complex explicit consent acquisition, and it is possible to increase the convenience for the user.

Note that the display shown in FIG. 8 is a live view display on a digital camera, and it is possible for the user to determine whether or not to record an image by pressing down the shutter button 11 while looking at this display.

Next, the biological information use unit 36 records the biological information based on the limits by the biological information use limiting unit 37 (S118). The biological information in this context is a facial image that is shown in an image, and is recorded on the nonvolatile memory 114 of the biological information processing apparatus 100 such that the user is able to reference this facial image later. In this context, the biological information use unit 36 captures an image when the user presses down the shutter button 11, associates this captured image with the consent information to serve as the image data 61 for the image of the person, and stores this. At this time, control is performed so as to make it possible to record the image regardless of the consent information (that is, even if there is no consent). By doing so it is possible to avoid cases in which a shutter chance is missed due to lack of consent, and it is possible to increase the convenience for the user. In addition, this is recorded within the apparatus, and is output and the like are not performed to another apparatus, and therefore, it is also easy to gain the subject's understanding.

For example, in a case in which the image that is shown in FIG. 8 is stored, as is shown in the diagram, information of the coordinate values for the square frame of the face frame G102, as well as the name "Suzu⊚ Vfu", and "explicit consent" for the consent information are recorded as the image data 61 for the image. The information for the face frame G103 is also recorded as the image data 61 in the same manner. With respect to the face frame G101, "unknown", which shows that the name is not specified, is recorded as the image data 61.

After this, the biological information use unit 36 of the biological information processing apparatus 100 determines whether or not to complete the processing for using the biological information (S119). In this context, for example, in a case in which an input is performed to end the processing for the use of the biological information by the user, it may be determined that this processing will be completed. In a case in which it has been determined during S119 that the processing for the use of the biological information will be completed (S119: Yes), the processing is completed, and in a case in which it has not been determined that the processing for using the biological information will be completed during S119 (S119: no), the processing returns to S112.

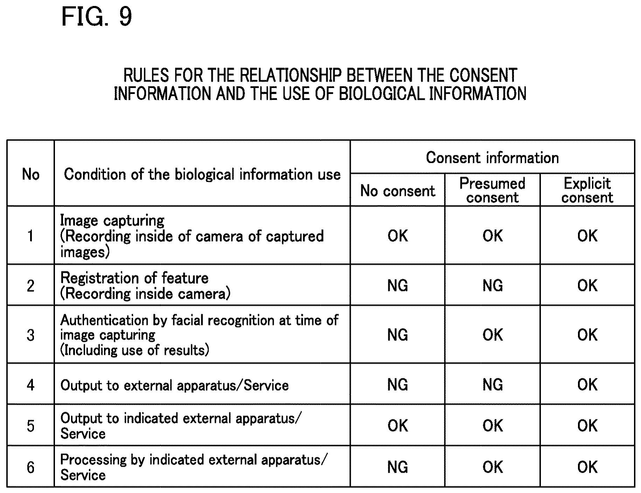

Next, an explanation will be given of an example of rules for the relationship between the use of biological information and consent information using FIG. 9.

FIG. 9 is a diagram showing an example of rules for the relationship between the use of biological information and consent information.

In the rules shown in FIG. 9, with respect to contents showing the mode of the use processing for the biological information, it is shown whether or not use of this processing is permitted for times when the values for the consent information are each of "no consent", "presumed consent", and "explicit consent" respectively. That is, "OK" shows that the use of biological information is permitted, and "NG" shows that the use of biological information is limited (cannot be executed).

Nos. 1 to 3 show the limits that have been explained in the present embodiment, and are all processing that is executed within the image capturing apparatus 1. No. 1 shows processing for "image capturing" (recording inside the camera of a captured image), and as was explained above, recording is permitted regardless of the value for the consent information. No. 2 is the registration of feature, and as was explained above, this is limited in cases in which the value for the consent information is no "explicit consent" (when this is "no consent", and "presumed consent"). No. 3 is permission for using the processing for specifying a person using AF/AE at the time of image capturing, that is, authentication by facial recognition, and as was explained above, shows that this is only permitted when the values for the consent information are "presumed consent" and "explicit consent". In this manner, the degree to which the limits are relaxed is increased by the degree of explicit consent shown in the consent information. That is, whereas in the prior art, all processing was limited unless there was explicit consent, in the present embodiment, if there is presumed consent, use of the results of the specifying of a person at the time of image capturing is permitted, and the limits are relaxed.

Note that No. 4 and after will be explained in the Second Embodiment.

As has been explained above, according to the processing for the biological information processing apparatus of the present embodiment, it is possible to limit the use of biological information for people for whom there is no explicit consent while also using biological information by relaxing the limiting based on presumed consent that has been presumed based on the acquisition state of the biological information. In particular, it is possible to achieve to a certain extent of both protection of privacy and convenience by controlling the permissions and limits for each processing according to the degree of explicit consent that is written in the consent information

### [Variation 1-1]

In the above-described First Embodiment, although an example has been explained in which the two biological information acquisition states of the position of the image capturing apparatus and the state of the subject are used as determination conditions to determine the presumed consent, other determination conditions may also be used as long as they are conditions from which the consent of the subject can be presumed.

For example, as these other determination conditions, consent information for people other than the person who is the subject, for example, people who are also in the image at the same time as the subject may also be used. If a person in the image is close to another person who has given explicit consent, it can be determined that the subject next to this person is their friend or acquaintance, and it can be determined that there is a high possibility that they would give the same consent, and therefore, this can be made the grounds for assuming presumed consent. Whether or not subjects are close together in the image is determined by detecting the face of a person using a well-known facial detection technology, and determining that they are close to another subject in the image if a distance in the image for the face that has been detected is closer than a predetermined distance. As has been explained above, the consent information is associated with a position in the image of each face and stored as metadata, therefore, it is sufficient if this is referenced. It may also be made such that another well-known scene estimating technology is used, it is determined whether or not people who are close together in the image know each other from the positions of the people in the captured image, and the consent information for these people is used. In addition, whether or not people know each other may also be determined by using captured images that have been captured in the past, not just one captured image.

As other determination conditions, if there was presumed consent for a subject who is a target in a captured image that was captured in the past, there is a high possibility that there will also be presumed consent currently, and therefore, this can also be made the grounds for determining presumed consent. It may be determined that the conditions are fulfilled if there is one captured image for which there was presumed consent in the past. It may also be determined that the condition is fulfilled if instead of one image, there is a number of images that is greater than or equal to a predetermined number of images.

As another determination condition, there is the type of image capturing apparatus, that is, the hardware configuration for the apparatus in which the biological information acquisition unit has been incorporated. If the lens that the image capturing apparatus is provided with is not a telephoto lens, but is instead a lens for which faces cannot be image captured at a large size unless image capturing is performed at a close range, such as a wide angle lens, there is a high possibility that the subject is able understand that they are being image captured, and this can become the grounds for determining presumed consent. As a determination method for the type of lens, it is sufficient if it is made such that information that specifies the type of lens is specified in advance in the lens, communication is performed between the lens and the camera when the lens has been connected to the camera, and the camera, that is, the image capturing apparatus, acquires the information for the type of lens from the lens. The information for specifying the type of lens may be information for a number that is unique to a specific product, and information for a classification of lens such as wide angle, and telephoto.

In addition, as another determination condition, the image capturing parameters, that is, the acquisition parameters at the time of the acquisition of the biological information may also be used. For example, in a case in which the ISO sensitivity from the time of the image capturing was low, it can be thought that the image capturing was performed in a bright location, and that there is a high possibility that the person was able to understand that their image was being captured. When the subject is able to understand that their image is being captured, it is presumed that there is consent for the use of the biological information from the subject. In addition, in a case in which the focal point distance for the camera is short, it can be thought that the image capturing had to have been performed from physically close to the subject, and that there is a high possibility that the subject was able to understand that their image was being captured. In addition, if the shutter speed is slow (in comparison to a case in which the shutter speed is fast), the length associated with image capturing becomes long, and therefore, it is possible for the subject to understand that their image is being captured. Such image capturing parameters can be used as the determination conditions if the conditions are set to the image capturing parameters being a value that is greater than or equal to a predetermined value, and less than a predetermined value.

As another determination condition, the image capturing location (location in which the apparatus is used) may also be used. If the position of the apparatus is a venue of a specific event, or the like, it can be presumed that the subject understands to a certain extent that their image is being captured, and therefore, this can be made the grounds for determining presumed consent. The information for the image capturing location (operating location for the image capturing apparatus) may indicate a location in which presumed consent can be assumed by installing a GPS (Global Positioning System), and the like in the biological information processing apparatus, and further making it such that map information is recorded, then indicating a predetermined location as an event venue that has been indicated in advance, or having the user of the image capturing apparatus 1 with the built in biological information processing apparatus 100 register a home location. By doing so, it is possible to determine whether or not the location is the event venue using GPS at the time of image capturing. In addition, in a method of use such as a surveillance camera in a fixed location, there is a possibility that this is image capturing that is not desired by the subject, and therefore, if the location for the image capturing apparatus is in a state in which it moves for a pre-determined period of time, this may also be used as the grounds for the determination of presumed consent. That is, the fixing method (installation method) for the image capturing apparatus may also be made the grounds for the determination.

In addition, as the state of the subject, an example has been given in the present embodiment of the orientation of the subject, the expression of the subject, or a gesture made by the subject. However, in addition to these, whether or not there are past results for explicit consent for this subject may also be used. If past explicit consent is used, there is a high possibility that this consent will be continuously shown, and therefore, this may also be used as the grounds for the determination of presumed consent. Due to this, it is possible to set a temporal usage limit for explicit consent, and if information for explicit consent that has expired for a target subject is associated therewith, it is possible to confirm and reference previous consent results.

In addition, as another state of the subject, whether or not the subject is taking an image of themselves may also be made a condition. If a person is taking an image of themselves, it is clear that they themselves are consenting, and therefore, this may also be made the grounds for determining presumed consent. As the method for determining whether or not the subject is taking an image of themselves, a gyro sensor may be built into the biological information processing apparatus 100, and this may be determined based on the slope condition of the image capturing apparatus, it may be determined whether or not an image has been self-captured from the composition of the captured image such as the size of the area of the face of the subject in the captured image and the like, and both of these methods may also be combined.

In addition, in the First Embodiment, although presumed consent was determined in a case in which both of the two conditions of the position of the image capturing apparatus and the state of the subject were satisfied, other conditions may also be used. This may also be determined if one of these conditions is met, and it made also be made such that a plurality of conditions for other acquisition states are prepared, and presumed consent is determined if a predetermined number of these conditions is satisfied.

It may also be made such that a degree of importance (a numerical value) is set for each condition, and in a case in which conditions are satisfied, the degrees of importance thereof are added together. By doing so, a presumption of the consent state in which the conditions that are important for deciding presumed consent have been emphasized becomes possible.

In addition, it may also be made such that presumed consent is determined for a subject who is currently attempting to capture images and for whom presumed consent was determined in an image that had been captured by looking back at images that have been previously captured. By doing so, it is possible to perform processing with the conditions for presumed consent without acquiring explicit consent for images that have been captured in the past, and it is possible to increase the convenience.

### [Variation 1-2]

Although in the present embodiment, at the time of registering biological information for individuals, the extraction of feature from biological information was limited using only explicit consent, presumed consent may also be used at the time of registration. Specifically, the feature for biological information may also be registered by presuming the consent state even in a case in which there is no explicit consent during the registration processing of the biological information for the individual. By doing so, it is possible to use the feature even if there was no explicit consent at the time of the registration of the biological information for the individual, and therefore, it is possible to increase the convenience.

### [Variation 1-3]

Although in the First Embodiment, the presumed consent information was shown using two values for whether or not there was presumed consent from the provider of the biological information, there may also be a plurality of values. For example, a number of conditions that have been satisfied from among the conditions for deciding presumed consent may also be made the presumed consent values. By doing so, it is possible to show how high the degree of accuracy for the presumption of consent is. It may also be made such that processing such as switching the processing for limits and permissions are performed according to the degree of accuracy for the presumption. In addition, it may also be made such that as the plurality of conditions, real number values are calculated by using predetermined calculation formulas.

In addition, although in the present embodiment, it was made such that there are three values for the consent information, a different amount of values may also be used, for example, real number values may be used. It is sufficient if in order to calculate the real number values, a predetermined calculation formula in which the explicit consent information and presumed consent information are input is prepared, and the real number values are calculated using this formula.

### [Variation 1-4]

In the present embodiment, an explanation has been given in which the consent of a target is acquired by displaying, on the display panel 12 of the image capturing apparatus 1, a display indicating the use of biological information and a display (image prompting consent) that receives the selection of whether or not the target consents to this use. However, it is not the case that the present disclosure is particularly limited in the method for acquiring the consent information as long as it is possible to confirm the presence or absence of consent from the user. For example, the biological information processing apparatus 100 may also acquire consent information based on input in an application on a portable terminal such as a separate smartphone or the like. In such a case, when the biological information processing apparatus 100 communicates with the portable terminal and acquires the consent information (S103 of FIG. 6), it is possible to make it such that a request is sent to the portable terminal for the transmission of consent information. The portable terminal that has received this request displays an image prompting consent on the screen, acquires consent information by receiving inputs showing consent from the user of the portable terminal, and transmits the consent information to the biological information processing apparatus 100. At this time, in order to detect fraud and avoid consent being given by a person who is different from the user, it may also be made such that in the biological information processing apparatus, it is confirmed if the person who is the target of the registration processing is the same person as the user of the portable terminal (performing identity authentication). Therefore, identity authentication may also be performed for the user of the portable terminal on the side of the portable terminal, and identity authentication may also be performed using a security function of the portable terminal. For example, it is possible to transmit a facial image of the person that is being registered by the biological information processing apparatus 100 to the portable terminal, and for the portable terminal to confirm whether or not the person in the facial image is the same person as the user of the portable terminal using a well-known authentication by facial recognition technology. The facial image of the user of the portable terminal is captured by, for example, the front camera of the portable terminal. According to such a configuration, it is possible to avoid fraudulent consent and to acquire consent information from the target. Note that the identity authentication is not limited to such authentication by facial recognition technology, and this may also use an arbitrary authentication technology such as finger print authentication, and the like with which the portable terminal has been equipped, and this may also be authentication processing using an electronic certificate, and the like.

### [Second Embodiment]

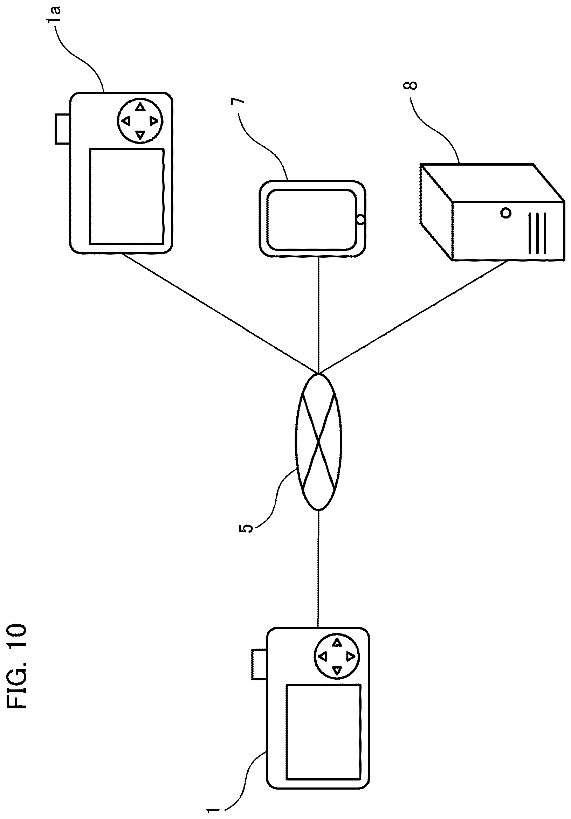

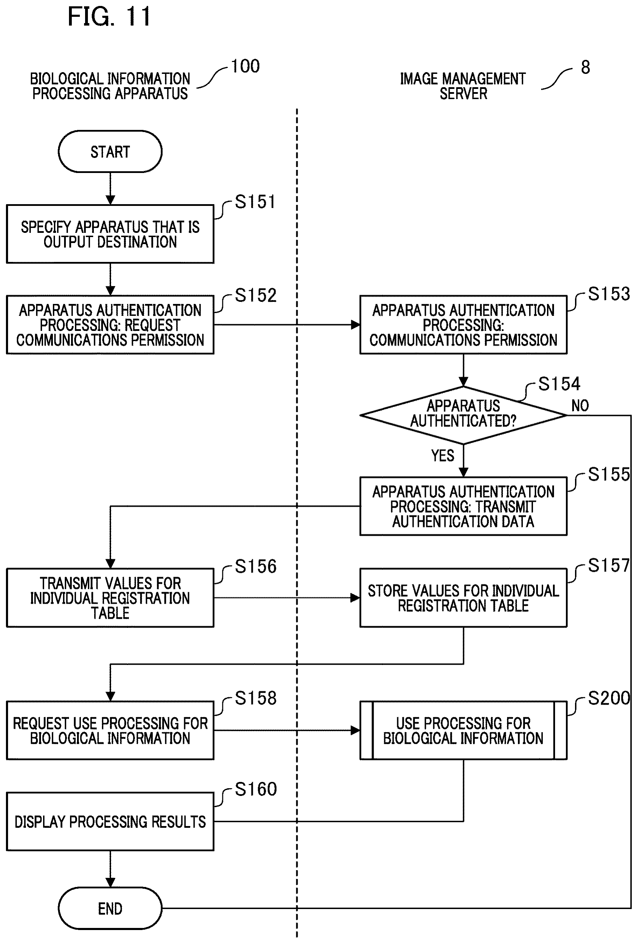

Below, a Second Embodiment will be explained using FIG. 10, and FIG. 11.

Although in the First Embodiment, an example was explained in which biological information from an image was processed in an image capturing apparatus using the internal biological information processing apparatus 100 based on the consent information, in the present embodiment, an example will be explained in which the biological information is output to an external apparatus, and the biological information is used and processed inside of the external apparatus.

First, the configuration of the information processing system that uses the biological information will be explained using FIG. 10.

FIG. 10 is a configuration diagram for an information processing system that uses biological information.

As is shown in FIG. 10, the information processing system of the present embodiment is a configuration in which the image capturing apparatus 1, an image capturing apparatus 1a, a portable terminal 7, and an image management server 8 have been connected by a network 5. Each apparatus is able to perform the transmission and reception of requests and data with the other apparatuses.

The image capturing apparatus 1 has the configuration that was shown in FIG. 2 of the First Embodiment, and is an apparatus that captures image such as, for example, a digital camera in which the biological information processing apparatus 100 has been incorporated internally therein.

The network 5 is a network for performing mutual communications between each apparatus. The network 5 may be, for example, a dedicated network such as a LAN (local area network), and it may also be a global network such as the internet. In addition, as the connection form for the network 5, wireless communications may be used, and wired communications may also be used.

The image capturing apparatus 1a is a second image capturing apparatus in the information processing system, and is an apparatus such as a digital camera that has been provided with the same hardware configuration and functional configuration as the image capturing apparatus 1.

The portable terminal 7 is an information processing apparatus that is portable, and for example, is a smartphone, and a tablet.

The image management server 8 is a server that stores images from the image capturing apparatus 1, manages the images, and provides data and information relating to the images to other apparatuses. The image capturing apparatus 1a, the portable terminal 7, and the image management server 8 function as external apparatuses in the present embodiment.

In the present embodiment, first, an explanation will be given of an example in which the biological information, feature, and consent information are output from the image capturing apparatus 1 to the image management server 8 based on the consent information, and the image management server 8 processes the biological information, feature, and consent information.

The image management server 8 provides an image management service, and the services that are provided are the various services of storing images that have been transmitted from other devices for each user, and sharing and managing the images according to requests from the other apparatuses.

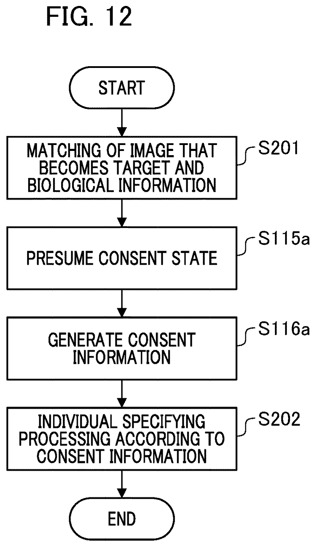

Next, using FIG. 11 and FIG. 12, the series of processing for using the biological information that has been obtained in the image capturing apparatus 1 using external processing in the information processing system that was shown in FIG. 10 will be explained.

FIG. 11 is flowchart showing the series of processing for using the biological information that has been obtained in the image capturing apparatus 1 using external processing in the information processing system according to the Second Embodiment.

FIG. 12 is a flowchart showing the details of the use processing for the biological information.

The processing that is shown in FIG. 11 is begun at a point in time at which the user of the image capturing apparatus 1 performs a command to externally output the biological information, feature, and consent information by operating the information capturing apparatus 1.

First, the apparatus authentication unit 38 of the biological information processing apparatus 100 that was shown in FIG. 3 of the embodiments specifies the apparatus to which to output the biological information and feature (S151). Specifically, the user or vendor of the image capturing apparatus 1 associates and records services that have permission to process the biological information and feature with apparatuses that provide these services in advance in the biological information processing apparatus 100 that has been built into the image capturing apparatus 1, and has the user make a selection from among these. The external apparatus to which the biological information and feature are transmitted is thereby specified. By having the user make a selection in this manner, it is possible to specify what kind of processing an external apparatus will execute on the biological information and feature. In the present embodiment, it is made such that image classification processing using feature, which will be described below, is indicated, and the image management server 8 that has been selected as the external apparatus that will execute this processing.

Next, the apparatus authentication unit 38 of the biological information processing apparatus 100 performs authentication processing for the external apparatus that was specified during step S151, that is, for the image management server 8 via the network (S152). Specifically, the apparatus authentication unit 38 transmits a request to permit data communication of the biological information and feature to the image management server 8. At this time, it is made such that the image management server 8 can be authenticated by outputting an apparatus identifier that can specify the image capturing apparatus 1 to the image management server 8. The apparatus identifier is an identifier for specifying an apparatus, and the identifier may be prepared independently, and a pre-existing identifier may also be used. For example, information such as the manufacturing number, and the MAC address for the apparatus may also be used.

Next, the image management server 8 performs apparatus authentication based on the apparatus identifier that has been acquired (S153). Specifically, the image management server 8 permits transmission of data and requests between the biological information processing apparatus 100 that is built into the image capturing apparatus 1, and the image management server 8. As the structure for the permission, it is made such that the image management server 8 stores a list of apparatus identifiers for which permission has been given in advance, and performs permission in a case in which the apparatus identifier that has been acquired is included in this list.

By performing the apparatus identification in such a manner, it is possible for the biological information processing apparatus 100 that has been built into the image capturing apparatus 1 to output the biological information and feature to expected services and apparatuses that have been indicated. That is, it is possible to prevent the output to services and apparatuses that are not expected, and therefore, it is possible to prevent the unintended use of biological information,

Next, the image management server 8 determines whether or not the apparatus authentication during step S153 succeeded (S154), and when the apparatus authentication did succeed (S154: yes), the processing proceeds to S155. When the apparatus authentication did not succeed (S154: No), the processing is completed.

When the apparatus authentication has succeeded, the image management server 8 creates authentication data and transmits it via the network 5 to the apparatus authentication unit 38 of the biological information processing apparatus 100 that has been built into the image capturing apparatus 1 (S155). The authentication data is data that shows that the reception of data such as biological information and feature thereof from the biological information processing apparatus 100 that has been built into the image capturing apparatus 1 is permitted.

Next, the biological information use unit 36 of the biological information processing apparatus 100 transmits the values for the individual registration table 50 that was shown in FIG. 4 to the image management server 8 on the condition that the apparatus authentication unit 38 has received the authentication data (S156). The individual registrational table 50 is a table in which names, facial images and feature are associated with explicit consent information as was explained in the First Embodiment. In this context, the biological information is a plurality of facial images that include the faces of subjects. When performing transmission, the biological information use unit 36 performs transmission to the image management server 8 together with the authentication data that was acquired from the apparatus authentication unit 38. The image management server 8 permits the reception of the values for explicit consent from the individual registration table 50 and the captured images by checking the authentication data.

Next, the image management server 8 receives the values from the individual registration table 50, and stores these on an external apparatus (not shown) such as an HDD, an SSD, and the like of the image management server 8 (S157).

Next, the biological information use unit 36 of the biological information processing apparatus 100 requests use processing for the biological information that has been received from the image management server 8 during step S157 (S158). As was explained above, the usable services are recorded in the biological information processing apparatus 100 in advance, and the execution of processing by these is requested. The present disclosure may also be made a form in which a plurality of services are prepared, and one or more is chosen from among these services.

Next, the image management server 8 executes use processing for the biological information for which the request has been received from the biological information processing apparatus 100 during step S158 (S200). In the present embodiment, for example, the present disclosure executes an image classification service (specification of an individual using feature) using the feature. At this time, the image capturing apparatus 1 transmits an image that will become the target for the image classification. The details of the use processing for the biological information will be explained below using FIG. 12.

Next, the biological information use unit 36 of the biological information processing apparatus 100 acquires the processing results from S200, that is, meta data in which an individual has been specified, from the image management server 8, and displays these results (S159). In this context, a list of all of the people who exist in the metadata is displayed together with facial images, and the user is made to select which person they would like to display the image for, and the image in which the selected person appears is displayed. By doing so, it is possible to perform the operations of displaying, processing, editing, or deleting images in which just a specific person appears, and therefore, it is possible to increase the convenience.

Next, the details of the use processing for the biological information will be explained using FIG. 12.

This is processing that corresponds to S200 in FIG. 11.

During the use processing for the biological information, the image management server 8 searches for a person who matches the biological information (facial image) that was stored in S157 from the same image that was then transmitted during S158 (S201). Who appears in which photos is specified using facial detection technologies and authentication by facial recognition technologies such as those that were explained in the First Embodiment. The information for the person who has been specified is linked to the image and stored as metadata.

Next, the image management server 8 performs the presumption of the consent state for the subjects who appear in the target image (S115a). This processing is the same as the processing for S115 in FIG. 7 of the First Embodiment.

Next, the image management server 8 performs the generation of consent information based on the consent state that has been presumed during S115a (S116a). This processing is the same as the processing for S116 in FIG. 7 of the First Embodiment.

The use of three types of values, "no consent", "presumed consent", and "explicit consent" for the consent information, and the method for setting those values are the same as in the First Embodiment.

Next, the image management server 8 extracts a specified person based on the consent information from S116a (S202). At this time, the processing target for the image management server 8 is made only people for whom there is explicit consent in the individual registration table 50, and people for whom the consent information according to the captured image is "presumed consent", and "explicit consent". In this case, only the feature for people for whom there is explicit consent can be used (Rule No. 2 in FIG. 9) from among the feature in the individual registration table 50, and therefore, the image classification is only executed for people for whom there is explicit consent. The people for whom there is presumed consent are not in the registration dictionary, and during the classification of images, they are grouped together and classified as other people. By doing so, it is possible to limit the processing in authenticated external apparatuses according to the consent information. There are many people who feel anxious about the processing of biological information by an external apparatus and therefore, by having the people for whom there is not explicit consent be excluded from the processing targets, it is possible to achieve both privacy protection and convenience to a certain extent.

Next, an example of the rules for the relationship between the use of the biological information and the consent information in relation to the Second Embodiment will be explained with reference to FIG. 9 again.

In this context, in the present embodiment No. 4 to No. 6 will be explained with respect to the relationships between usage and consent information for biological information in an external apparatus.

No. 5 is the processing for output to the indicated external apparatus, that is, the external apparatus for which the authentication processing was completed, and is permitted regardless of what the value for the consent information is (even if this is "no consent"). No. 6 is the processing for the biological information by the indicated external apparatus, and this processing is permitted when the value for the consent information is "presumed consent", and "explicit consent". In this manner, the extent to which the limits are relaxed increases according to the degree of explicit consent that is indicated by the consent information. That is, whereas in the prior art, all processing was limited if there was not explicit consent from the person who provided the biological information, in the present embodiment, when consent from the person who provided the biological information is presumed, processing in the external apparatus is permitted, and the limits are relaxed.

In addition, in No. 4, the information processing apparatus is not indicated, that is, No. 4 is output to an external apparatus/service that is not expected, and is permitted only if the value for the consent information is "explicit consent". The unexpected use of biological information is thereby limited.

According to the processing of the present embodiment, it is possible to decrease the processing load for the biological information processing apparatus 100 by executing processing in an external apparatus (the image management server) in relation to biological information for which there is consent from the subject based on the consent information. At this time, the information for presumed consent that has been presumed from the biological information is also used, and it is possible for the user of the biological information processing apparatus 100 to also use biological information for which there is no explicit consent by limiting the processing that is executed, and it is possible to increase the convenience. In addition, the subject of the biological information also does not need to perform complex explicit consent and therefore, it is possible to increase the convenience.

### [Variation 2-1]

In the present embodiment, although an example has been explained in which the external apparatus to which the biological information is output is the image management server 8 of FIG. 10, a different apparatus may also be used as long as it is able to execute the same processing. For example, the image capturing apparatus 1a, and the portable terminal 7 may also be used.

### [Variation 2-2]

In the present embodiment, although the biological information was output to an external apparatus for which authentication had been completed regardless of the consent information, the biological information that can be output may also be limited according to the consent information.

In addition, although in the present embodiment, control was performed to limit the target of the processing that is performed by the image management server 8 to biological information for which the consent information is "presumed consent", and "explicit consent", control other than this may also be performed. For example, instead of limiting the processing target according to the consent information (that is, all biological information will be processing targets), the processing may also be switched according to the consent information. For example, switching may be performed such that with respect to the biological information with "no consent", mask processing is performed, all other people who appear in the photo are specified, and image classification is performed. By doing so, it is possible to automatically perform the complex processing of managing the biological information with "no consent", and it is therefore possible to increase the convenience. In addition, it is possible to execute highly convenient processing for people who have given consent according to this consent, and it is possible to increase the convenience while protecting privacy.

### [Variation 2-3]

Although in the present embodiment, processing was performed by the external apparatus, that is, the image management server 8, on the biological information and the feature that were acquired from the biological information processing apparatus for which apparatus authentication was performed, it may also be made such that the permission information for processing biological information is associated with the biological information and processing is performed by the image management server 8 according to this permission information. Specifically, it is made such that the biological information processing apparatus 100 is further provided with a permission information generating unit that serves as a function configuring unit, and the permission information generating unit generates permission information for the processing of the biological information by the external apparatus based on the consent information. In addition, the permission information that has been created is linked with the biological information and output to the external apparatus from the biological information use unit. The image management server 8 processes the biological information based on the permission information that has been acquired.

By associating the permission information with the biological information in this manner, it is possible for the image management server 8 to determine whether or not it may process the biological information and feature without querying the biological information processing apparatus 100, and the freedom of timing for the processing is increased, and therefore, it is possible to increase the convenience.

In addition, information for the services for which the image management sever 8 has permission to execute may also be included in this permission information. By doing so, in a case in which a plurality of services have been prepared in the image management server 8, it is possible for just the image management server 8 to grasp which processing is permitted for which biological information and therefore, the freedom of the timing of the processing is increased, thereby making it possible to increase the convenience.

### [Variation 2-4]

In addition, although in the present embodiment, it was made such that unexpected processing was not performed on the biological information by performing control such that output could only be performed to external devices that had been authenticated, it may also be made such that technology such as encoding and the like is introduced and the limits on the use are made more precise. Specifically, the biological information processing apparatus 100 is provided with an encoding unit, and the biological information and feature are output to the external apparatus after having been encoded by the encoding unit. Furthermore, it is made such that the biological information processing apparatus 100 is provided with a decoding key generating unit as a function configuring unit that generates a decoding key for decoding the biological information and feature that have been encoded. In addition, the decoding key that was generated by this decoding key generating unit is output to the external apparatus from the biological information processing apparatus 100, and when the external apparatus will use the biological information and feature, these are decoded using the decoding key before being used. By doing so, it is possible to prevent data from being extracted from the biological information processing apparatus 100 and unintended usage from being performed. In the previous embodiment, the image capturing apparatus 1 is a digital camera with the biological information processing apparatus 100 being built therein, and there are many cases in which the biological information is stored on small, portable media ( a memory card such as an SD card, and the like). In such a case, even if the portable media is extracted, if the person who has extracted the media cannot acquire the decoding key, they will not be able to use the biological information, and therefore, it is possible to prevent unintended use of the biological information.

### [Variation 2-5]

Although in the present embodiment, image classification has been given as an example of the service that is provided by the external apparatus, that is, by the image management server 8, this may also be another service that uses other biological information and feature points.

For example, after a person has been specified from a plurality of images by using the registered feature, processing may also be performed such as making it not possible to recognize the face of the person based on the permission information, and the like. As the method for making it not possible to recognize the face of the person, for example, methods are known such as masking the face, adding a mosaic, adding a blurring filter, trimming the image such that the face is not shown, and the like.

As was shown in variation 1-3, in a case in which the consent information is realized using a real number value, it may also be made such that the processing parameters are controlled according to the value for the consent information. For example, the strength of the blurring filter may be adjusted so as to be, for example proportional to the multiplicative inverse of the value for the consent information. By doing so, it is possible to make it such that when the value for the consent information is high, the blur amount becomes small, and when the degree of explicit consent is low, the blur amount becomes large, and the privacy protection is automatic according to the intent of the subject, and therefore, it is possible to perform control of the use of the biological information according to this intent. As a representative example of the blurring filter, for example, a Gaussian filter can be used, wherein the processing parameter thereof is the radius of the filter.

In addition, even in the case of performing image classification by specifying a person, for example, the threshold value for determining that a person is the same person may also be adjusted so as to be proportional to the inverse multiplicate of the value for the consent information. In this context, the value for determining that a person is the same person takes the distances for each pixel in the image, and becomes larger in different images. By doing so, the possibility that a person who has a small value for their consent information will be mistakenly classified as a different person becomes high, and the possibility that an image of this person will be properly classified is lowered. The ratio that is expressed as the classification results is thereby decreased, and this is linked to the protection of the privacy of people who have a small value for their consent information. Conversely, the higher a value for their consent information that a person has, the lower the possibility that they will be mistakenly classified as another person becomes, and there is a high possibility that photos of this person will be properly classified an therefore, it is possible to use the biological information in processing that places an emphasis on the classification of images of a person even though concerns about privacy are high.

### [Other Embodiments]

Although in the First Embodiment, and the Second Embodiment, examples were explained in which facial images were acquired to serve as the biological information, as long as the biological information includes information for the user, it is not the case that it is particularly limited to images including their face. For example, the biological information may also be an image that includes information that could specify the user thereof such as the iris, finger prints, veins, or the like of an individual. Even in a case in which such biological information is used, it is possible to extract feature from this biological information in the same manner. Note that the apparatus that acquires the captured images may also be made an image capturing apparatus including an appropriate sensor that corresponds to each type of biological information. For example, in a case in which the subject of the captured images of the user of the biological information is linked to other biological information such as the iris, finger prints, veins and the like of this individual, and consent is presumed from the state of the image, it may also be made such that this other biological information can be used.

### [Variations of the biological information processing apparatus]

Although an explanation has been given in which the biological information processing apparatus 100 according to the present embodiment is incorporated into the image capturing apparatus 1 (digital camera), the configuration of the biological information processing apparatus 100 is not particularly limited to such a configuration as long as it is able to execute the same processing. For example, the biological information processing apparatus 100 may also be a smartphone with a camera, and may also be incorporated into a network camera that is provided with a pan/tilt/zoom function that is able to adjust the image capturing angle of view. In this case, as the method for using the results of specifying the person, a method of use is assumed in which the pan/tilt/zoom are controlled so as to capture images of the individual who has been specified. In a case in which the biological information processing apparatus 100 is used for such a purpose, it is becomes possible to suppress privacy infringement by controlling the use of the biological information for people who have not given consent, and it is possible to prevent misuse of the biological information processing apparatus 100. In addition, in a case in which the biological information processing apparatus 100 is incorporated into a network camera, it may also be made such that a separate server that manages the network camera and records captured video images is prepared, and the acquisition and registration processing for the consent information is executed by this server. In such a configuration, when consent is being acquired from the user, a UI for acquiring consent information on the server, that is, a display to the effect that biological information will be used and a display that receives a selection of whether or not the user consents to this use, are displayed on the display apparatus, and it is possible to make this such that whether or not the user consents is acquired by the user performing input using an input device such as a mouse, a keyboard, and the like.

An explanation has been given of an example in which in the biological information processing apparatus of the present embodiment, the CPU reads out and executes a program that has been installed on a non-volatile memory. However, it is also possible to realize the present disclosure using a hardware circuit (for example, an ASIC) that realizes functions such as those explained in FIG. 3 of the First Embodiment.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

This application claims the benefit of priority from Japanese Patent Application No. 2024-175520, filed on October 7, 2024, which is hereby incorporated by reference herein in its entirety.

## Claims

1. . A biological information processing apparatus (100) configured to perform processing by using biological information for a person, the biological information processing apparatus comprising a processor and a non-transitory computer-readable storage medium storing instructions that, when executed by the processor, cause the processor to:
acquire the biological information (31);
use the biological information and feature that have been extracted from the biological information (36);
acquire consent relating to the use of biological information for a person associated with the biological information (34);
limit the use of the biological information based on a value for the consent (37);
presume a consent state, based on an acquisition state at the time of acquisition of the biological information, that shows consent relating to the use of the biological information for the person associated with the biological information (32); and
relax, based on the consent state that has been presumed, the limits relating to the use of the biological information for the person associated with the biological information and the feature that have been extracted from the biological information (37).

2. . The biological information processing apparatus according to claim 1, wherein the biological information processing apparatus presumes the consent state of the person based on at least one of or a combination of the conditions of:
a positional relationship between an apparatus in which the biological information processing apparatus has been incorporated and the person at the time of the acquisition of the biological information;
a state of the person at the time of the acquisition of the biological information;
biological information and consent information for a person other than the person that is included in the biological information;
a hardware configuration of the apparatus in which the biological information processing apparatus has been incorporated; and
an acquisition parameter for the time of acquisition of the biological information;
past consent information for the person at the time of acquisition of the biological information; and
an operating location of the apparatus in which the biological information processing apparatus is incorporated, and an installation method for the apparatus in which the biological information processing apparatus is incorporated.

3. . The biological information processing apparatus according to claim 1 or 2, wherein the biological information is an image including a face of a person.

4. . The biological information processing apparatus according to any one of claims 1 to 3, wherein the biological information processing apparatus is incorporated into an image capturing apparatus, and inputs into the biological information processing apparatus are made images that have been captured by the image capturing apparatus.

5. . The biological information processing apparatus according to any one of claims 1 to 4, wherein the biological processing apparatus generates consent information showing a degree of explicit consent based on the value of the consent and the consent state that was presumed; wherein
the larger the degree of the explicit consent is, the higher an amount of relaxation becomes.

6. . The biological information processing apparatus according to claim 5, wherein the biological processing apparatus permits display of the biological information of the person and the feature that have been extracted from the biological information based on how big the degree of explicit consent that represents the consent information is.

7. . The biological information processing apparatus according to claim 5, wherein the biological information processing apparatus permits output of the biological information of the person and the feature that have been extracted from the biological information to an external apparatus based on how big the degree of explicit consent that represents the consent information is.

8. . The biological information processing apparatus according to claim 7, wherein the biological information processing apparatus generates permission information for use by the external apparatus of the biological information and the feature that have been extracted from the biological information; and
outputs the permission information to the external apparatus.

9. . The biological processing apparatus according to claim 7, wherein the biological information processing apparatus outputs the permission information, the consent information, the biological information, and the feature that have been extracted from the biological information to an external apparatus for which authentication processing has been performed with the external apparatus.

10. . The biological information processing apparatus according to claim 9, wherein the biological information processing apparatus permits the output to the external apparatus for which the authentication processing has been performed in a case in which the degree of explicit consent that represents the consent information is larger than a consent state in which consent is presumed.

11. . The biological information processing apparatus according to claim 10, further comprising:
an encoding unit configured to encode the biological information and the feature that have been extracted from the biological information; and
a decoding key generating unit configured to generated a decoding key for decoding the biological information that has been encoded and the feature that have been extracted from the biological information and encoded; wherein
the decoding key, the biological information that has been encoded, and the feature that have been extracted from the biological information and encoded are output to the external apparatus.

12. . An information processing system comprising: a biological information processing apparatus that is configured to perform processing for biological information of a person; and an external apparatus that is connected to the biological information processing apparatus, and is configured to receive and use biological information that is generated by the biological information processing, wherein the biological information processing apparatus:
acquires the biological information; and
acquires consent relating to use of biological information for a person associated with the biological information; and wherein
the external apparatus presumes, based on an acquisition state at the time of acquisition of the biological information, a consent state that shows consent relating to the use of the biological information for the person associated with the biological information; and
the external apparatus relaxes, based on the consent state that has been presumed, the limits relating to the use of the biological information for the person associated with the biological information and feature that have been extracted from the biological information.

13. . A biological information processing method by a biological information processing apparatus that is configured to perform processing by using biological information for a person; the biological information processing method comprising:
a biological information acquisition step in which the biological information processing apparatus acquires biological information for a person;
a biological information use step in which the biological information processing apparatus uses the biological information and feature that have been extracted from the biological information;
an explicit consent acquisition step in which the biological information processing apparatus acquires a consent state relating to the use of the biological information by the biological information use step for the person;
a biological information use limiting step in which the biological information processing apparatus limits, based on a value for the consent, the use of the biological information during the biological information use step; and
a consent state presuming step in which the biological information processing apparatus presumes, based on an acquisition state at the time of the acquisition of the biological information, a consent state representing consent relating to the use of the biological information for a person associated with the biological information; wherein
the biological information use limiting step relaxes the limits for the use of the biological information and feature that have been extracted from the biological information for a person for whom the consent state that has been presumed shows consent.

14. . A non-transitory computer-readable storage medium configured to store a computer program comprising instructions for executing the functions of the following units:
at least one processor or circuit executing the steps described in Claim 13.
